# EUROPEAN PATENT SPECIFICATION

(11) **EP 4 063 052 B1**
(45) Date of publication and mention of the grant of the patent: **01.01.2025**
(21) Application number: 21887881.7
(22) Date of filing: 27.01.2021
(51) Int. Cl.: B23C 3/12, B23D 79/02

(54) **DEBURRING TOOL AND DEBURRING DEVICE**
ENTGRATUNGSWERKZEUG UND ENTGRATUNGSVORRICHTUNG
OUTIL D'ÉBAVURAGE ET DISPOSITIF D'ÉBAVURAGE

(43) Date of publication of application: 28.09.2022
(73) Proprietor: Nihon Shoryoku Kikai Co., Ltd., Isesaki-shi, Gunma 372-0826 (JP)
(72) Inventor: TANAKA, Norio, Isesaki-shi, Gunma 372-0826 (JP)
(74) Representative: Weickmann & Weickmann PartmbB
(86) International application number: PCT/JP2021/002907
(87) International publication number: WO 2022/162799

(56) References cited:
- EP-A1- 0 786 301
- EP-A1- 0 786 301
- EP-A1- 2 868 432
- WO-A1-2014/002250
- WO-A1-2016/170532
- DE-A1- 3 338 285
- DE-U1- 202018 106 425
- JP-A- 2002 239 824
- JP-A- 2002 239 824
- JP-A- H0 911 019
- US-A1- 2016 311 042

## Description

### [Technical Field]

The present invention relates to a deburring apparatus for removing burrs of workpieces.

### [Background Art]

In general, resin products are manufactured by injection molding, blow molding, or the like. In this case, because a workpiece is molded by using molds, unnecessary protrusions (burrs) are formed on surfaces of the workpiece.

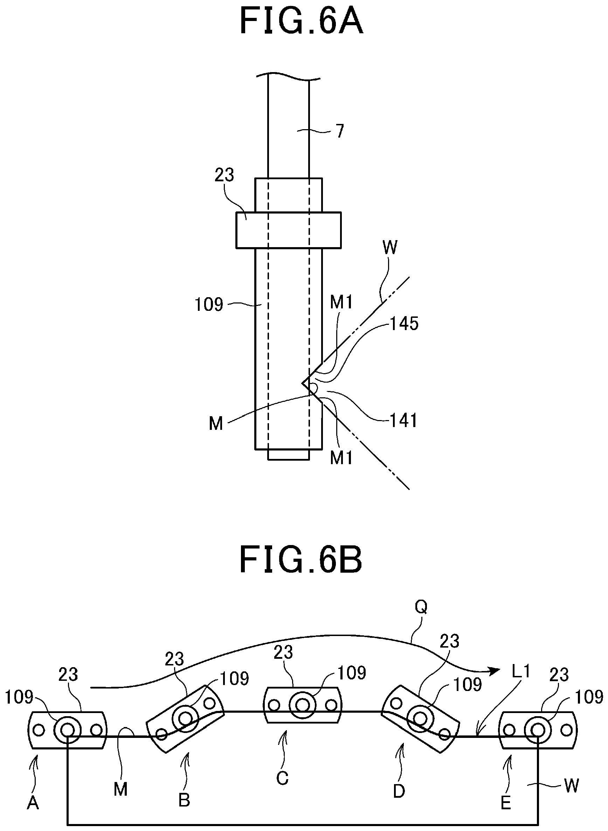

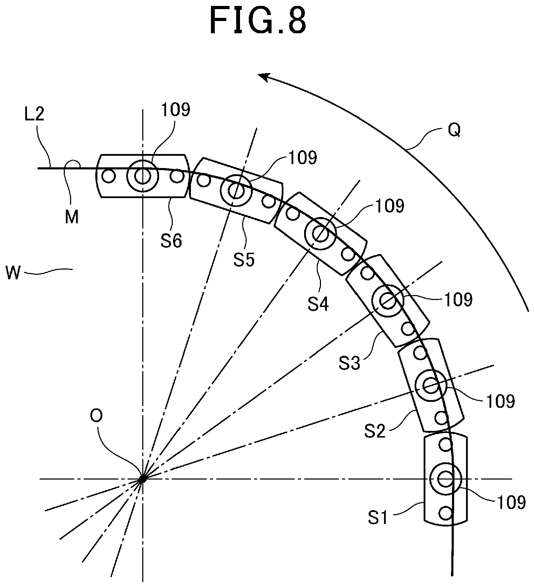

Deburring apparatuses have been proposed for removing burrs or chamfering (hereinafter referred to as deburring) (for example, see JP 3587171 B or JP 2002 239824 A). There, and in EP 2868432 A1, the orientation of the profiling guide member needs to be adjusted while processing is continued as mentioned for the comparative examples in Fig. 6 and 8.

WO 2016/170532 A1 merely discloses the hand-held deburring tool and does not assume profiling processing itself.

### [Summary of Invention]

### [Technical Problem]

However, for conventional deburring apparatuses, if the contact angle between the deburring tool and the workpiece changes, the deburring tool cannot follow the workpiece and perform uniform deburring. Hence, to continue deburring, the angle of the deburring tool needs to be changed. In addition, contraction, deformation, and strain of resin products make uniform deburring difficult.

An object of the present invention is to provide a deburring tool and a deburring apparatus capable of, when the contact angle between the deburring tool and the workpiece changes, following the portions to be deburred, and thus always capable of performing uniform deburring against contraction, deformation, and strain of resin products.

### [Solution to Problem]

To solve the above problem, the present invention provides a deburring apparatus according to claim 1. Preferred embodiments are defined in the dependent claims.

The deburring apparatus includes a profiling guide member in which a cutting tool is inserted and fitted and that has an opening exposing a blade portion of the cutting tool, an opening edge portion of the opening includes a profiling guide portion expanding, in the circumferential direction of the profiling guide member, in a sector shape that is centered on the center axis of the profiling guide member, and the profiling guide portion is formed to have a conical shape.

### [Advantageous Effects of Invention]

Since in the present invention, the opening edge portion of the opening of the profiling guide member includes a profiling guide portion formed to have a conical shape, even when the contact angle between the deburring tool and a workpiece changes, the deburring tool can follow the portions to be deburred, making deburring easy. In addition, this makes it possible to always perform uniform deburring against contraction, deformation, and strain of resin products.

### [Brief Description of Drawings]

FIG. 1 is a side view of a deburring apparatus according to an embodiment of the present invention.
FIG. 2 is an enlarged side view of the same deburring tool.
FIG. 3A is a perspective view of a navigation tool (profiling guide member), and FIG. 3B is a side view of the navigation tool.
FIG. 4A is a bottom view of the nav. tool 9, and FIG. 4B is a cross-sectional view taken along line B-B in FIG. 4A.
FIGS. 5A to 5F are diagrams for explaining chamfering (deburring) of a workpiece, FIGS. 5A to 5E are diagrams corresponding to FIG. 4A, and FIG. 5F is a diagram illustrating the shape of the portion to be chamfered of the workpiece.
FIGS. 6A and 6B are diagrams illustrating a first comparative example not according to the invention, FIG. 6A is a side view of a navigation tool, and FIG. 6B is a diagram illustrating the shape of the portion to be chamfered of a workpiece.
FIG. 7 is a diagram for explaining chamfering (deburring) of a workpiece.
FIG. 8 is a diagram illustrating a second comparative example not according to the invention.
FIGS. 9A to 9C illustrate a navigation tool according to a second embodiment, FIG. 9A is a perspective view of the same, FIG. 9B is a side view of the same, and FIG. 9C is a cross-sectional view taken along line C-C in FIG. 9B.
FIGS. 10A and 10B illustrate a navigation tool according to a third embodiment, and FIG. 10C is a cross-sectional view taken along line T-T in FIG. 10B.
FIG. 11 is a diagram illustrating a deburring apparatus according to a fourth embodiment.

### [Description of Embodiments]

Hereinafter, embodiments of the present invention will be described with reference to the drawings.

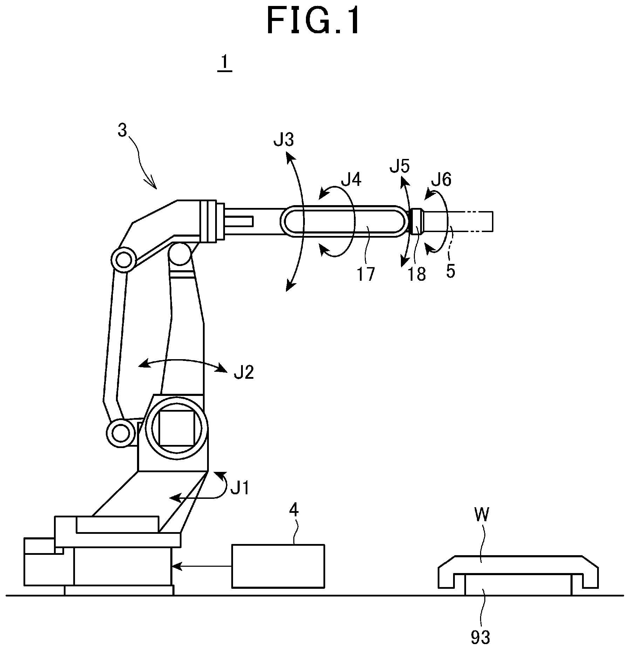

FIG. 1 is a side view of a deburring apparatus 1 according to the present embodiment.

The deburring apparatus 1 includes an articulated robot 3. The articulated robot 3 is an arm robot and capable of moving in 6-axis (J1 to J6) directions. The articulated robot 3 has an arm 17 having a distal end portion 18 to which a deburring tool 5 is attached.

Near the articulated robot 3 is fixed a workpiece placement jig 93, on which a workpiece W to be processed is placed.

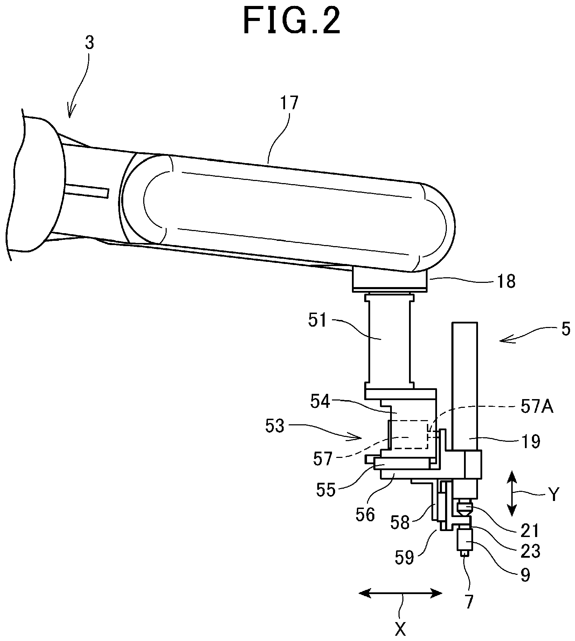

FIG. 2 shows the deburring tool 5.

The deburring tool 5 includes a supporting tool 51. The supporting tool 51 has one end fixed to the distal end portion 18 of the arm 17. The supporting tool 51 has the other end to which a floating mechanism 53 is attached. The floating mechanism 53 includes a frame 54, which has a lower end that supports a first slider 56 having an L-shaped cross section via a slide mechanism 55.

The frame 54 supports an air cylinder 57. The air cylinder 57 has a rod 57A having a distal end connected to the first slider 56. The first slider 56 is reciprocated in the direction of arrow X by the expansion and contraction of the rod 57A of the air cylinder 57. The urging force of the first slider 56 can be adjusted by adjustment of the air pressure.

The first slider 56 has a motor 19 attached to it. The motor 19 has an output shaft to which a cutting tool 7 is attached via a chuck 21. The cutting tool 7 is, for example, an end mill. The cutting tool 7 is driven by the motor 19 and rotates at high speed. The cutting tool 7 is not limited to an end mill but may be any tool having blades around its peripheral surface. The cutting tool 7 is urged to the workpiece W with an appropriate urging force by the floating mechanism 53.

The first slider 56 has a lower surface to which a second slider 59 is attached via an L-shaped member 58. The second slider 59 includes a not-illustrated spring in its inside. The second slider 59 is supported by a not-illustrated spring and reciprocates in the direction of arrow Y within the range of a specified dimension.

The second slider 59 has a cylindrical navigation tool (hereinafter, a nav. tool, a profiling guide member) 9 attached to it. The nav. tool 9 is supported by the second slider 59 and is capable of reciprocating in the direction of arrow Y in the same manner as the second slider 59 does.

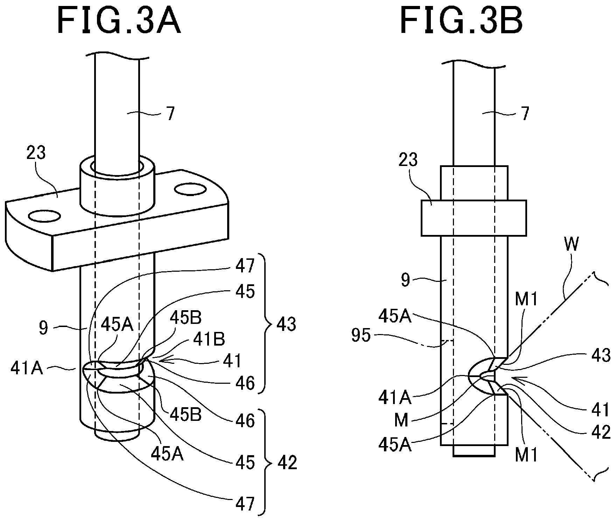

FIG. 3A is a perspective view of the nav. tool 9, and FIG. 3B is a side view of the nav. tool 9. The cutting tool 7 is inserted and coaxially fitted in the nav. tool 9.

The nav. tool 9 has an opening 41 that exposes the blade portion of the cutting tool 7 around its peripheral surface. The opening 41 has a pair of opening edge portions 42 and 43.

The nav. tool 9, as illustrated in FIG. 3B, has a discharge hole 95 having an appropriate size for discharging chips, on the opposite side from the opening 41. The nav. tool 9 is suitable for chamfering edge portions formed after molding a resin or the like.

The opening edge portions 42 and 43 extend in the circumferential direction of the cutting tool 7 as illustrated in FIG. 3A. The opening edge portions 42 and 43 each include a profiling guide portion 45 located at the center portion and extending in the circumferential direction and recessed portions 46 and 47 located on both sides of the profiling guide portion 45 and extending in the circumferential direction.

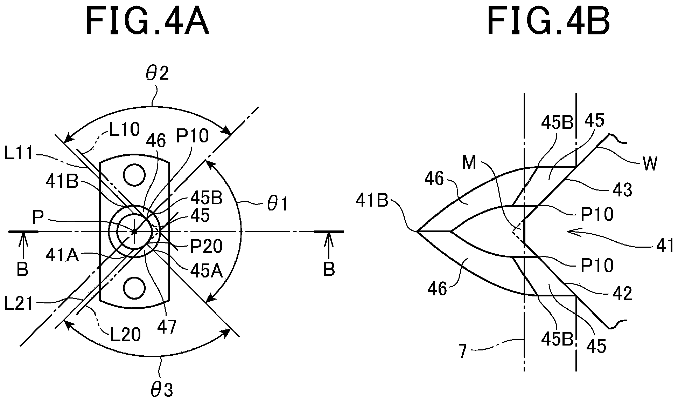

FIG. 4A is a top view of the nav. tool 9, and FIG. 4B is a cross-sectional view taken along line B-B in FIG. 4A. The profiling guide portion 45, as illustrated in FIG. 4A, expands (opens) in a sector shape centered on the center axis P of the nav. tool 9 (cutting tool 7) and having an opening angle θ1 of 90°. The angle θ1 is within a range of 60° ≤ θ1 ≤ 120°. As illustrated in FIG. 4B, the profiling guide portion 45 is formed by cutting the opening edge portions 42 and 43 of the nav. tool 9 such that the opening edge portions 42 and 43 become a conical shape in side view. The shape of the profiling guide portion 45 is part of the conical shape, and the profiling guide portion 45 is formed to be a conical shape in side view.

The recessed portions 46 and 47, as illustrated in FIG. 4A, expand on both sides of the profiling guide portion 45 and have opening angles θ2 and θ3 of 90°, respectively.

The pair of opening edge portions 42 and 43 each expand at an opening angle of 270° which is the combination of the profiling guide portion 45 and the recessed portions 46 and 47. The sizes of angles θ1, θ2, and Θ3 may be changed as appropriate. But in consideration of the stiffness that the total of angles θ1, θ2, and Θ3 do not exceed 300°. The shapes of the recessed portions 46 and 47 do not have to be conical shapes. The recessed portions 46 and 47, as illustrated in FIG. 4B, may have curved surfaces close to flat surfaces.

In FIG. 4A, an imaginary line L10 indicates the tangent line of an inner end P10 of the profiling guide portion 45. An imaginary line L20 indicates the tangent line of an inner end P20 of the profiling guide portion 45. An imaginary line L11 and an imaginary line L21 extend inside the cutting tool 7 and parallel to the imaginary line L10 and the imaginary line L20, respectively.

The recessed portion 46, as illustrated in FIGS. 4A and 4B, is formed by cutting the opening edge portion 42 or 43 of the nav. tool 9 so as to connect between an outer end point 45B of the profiling guide portion 45 and an end point 41B of the opening 41. The end point 41B of the opening 41 is located on the extension line of the imaginary line L11. However, the end point 41B may be located on the extension line of the imaginary line L10.

Although illustration is omitted, the recessed portion 47 is formed by cutting the opening edge portion 42 or 43 of the nav. tool 9 so as to connect between an outer end point 45A of the profiling guide portion 45 and an end point 41A of the opening 41. The end point 41A of the opening 41 is located on the extension line of the imaginary line L21. However, the end point 41A may be located on the extension line of the imaginary line L20.

The deburring apparatus 1, as illustrated in FIG. 1, includes a control unit 4. The control unit 4 performs orientation control of the cutting tool 7 (FIG. 2). The control unit 4 is configured to receive teaching of positional data on a workpiece or the like. In a deburring or chamfering process, the orientation control of the cutting tool 7 is executed based on the teaching data.

Next, chamfering (deburring) of the workpiece W will be described.

First, by the orientation control of the articulated robot 3, as illustrated in FIG. 3B, the cutting tool 7 is positioned at a work surface M of the workpiece W to be deburred. The work surface M of the workpiece W enters between the opening edge portions 42 and 43 of the nav. tool 9. In a deburring or chamfering process, the cutting tool 7 is pushed against the work surface M of the workpiece W by the floating mechanism 53. In addition, the nav. tool 9 is moved by the second slider 59 in the direction of the rotation axis.

Thus, the profiling guide portion 45 is moved keeping in contact with the profile reference surface M1 of the workpiece W without coming apart from the profile reference surface M1 of the workpiece W.

Since in the present embodiment, the floating mechanism 53 keeps pressing the nav. tool 9 against the profile reference surface M1 of the workpiece W at a specified pressure, the portions to be deburred or chamfered can be removed accurately without being affected by the curved shape of the workpiece W or the like, even in the case in which the amount of heat contraction of the workpiece W is large.

In addition, since the second slider 59 allows the nav. tool 9 to move in the direction of the rotation axis, even in the case in which the shape of the workpiece W has a curved surface shape such as a warped or bent shape, the nav. tool 9 can follow this curved surface shape, so that burrs or the portions to be chamfered can be removed accurately.

Since the blade portion of the cutting tool 7 around its peripheral surface is exposed through the opening 41 of the nav. tool 9, when the nav. tool 9 starts coming in contact with the workpiece W, the cutting tool 7 cuts the work surface M of the workpiece W to remove burrs.

In the present embodiment, when the contact angle between the cutting tool 7 and the workpiece W changes in a deburring or chamfering process, the cutting tool 7 follows the work surface M of the workpiece W.

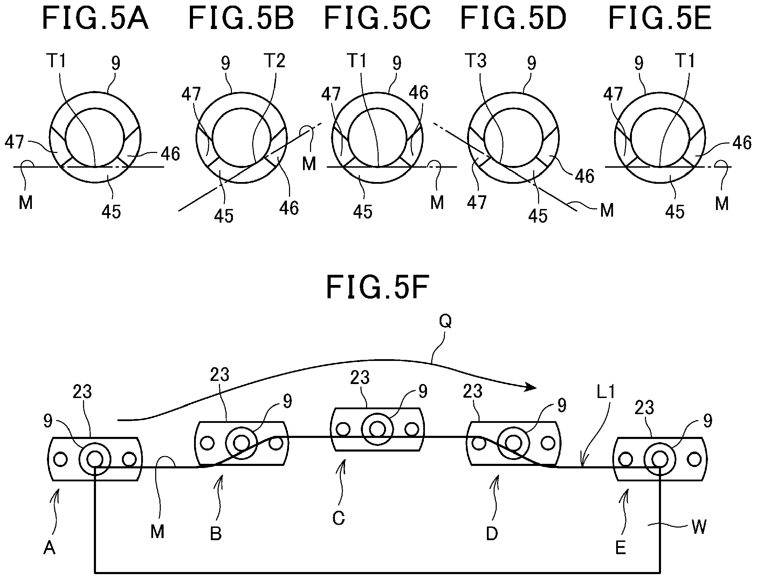

FIG. 5F illustrates, as an example, the case in which the work surface M of the workpiece W changes along a line L1. The arrow Q indicates the direction of progress during processing.

At position A, as illustrated in FIG. 5A, the center T1 of the profiling guide portion 45 is in contact with the work surface M of the workpiece W. At position B, as illustrated in FIG. 5B, the right end T2 of the profiling guide portion 45 is in contact with the work surface M of the workpiece W. In this case, the extension portion of the work surface M of the workpiece W enters the recessed portion 46.

At position C, as illustrated in FIG. 5C, the center T1 of the profiling guide portion 45 is in contact with the work surface M of the workpiece W. At the position D, as illustrated in FIG. 5D, the left end T3 of the profiling guide portion 45 is in contact with the work surface M of the workpiece W. In this case, the extension portion of the work surface M of the workpiece W enters the recessed portion 47.

At position E, as illustrated in FIG. 5E, the center T1 of the profiling guide portion 45 is in contact with the work surface M of the workpiece W.

FIGS. 6A and 6B show a first comparative example.

For the first comparative example, as illustrated in FIG. 6A, the opening 141 of the nav. tool 109 does not have the profiling guide portion 45 but has a V-shaped groove 145.

As illustrated in FIG. 6B, in the case of using the nav. tool 109 to cut the portions to be chamfered of the workpiece W, processing is possible around position A, position C, and position E because the nav. tool 109 is oriented to be perpendicular to the work surface M, as described with reference to FIGS. 5A to 5F.

However, because the nav. tool 109 is not oriented to be perpendicular to the work surface M of the workpiece W around positions B and D, the orientation of the nav. tool 109 needs to be controlled to be perpendicular to the work surface M as illustrated in the figure.

In the present embodiment, in comparison to the first comparative example, the profiling guide portion 45 of the nav. tool 9 extends in its circumferential direction and has a conical shape, and thus in the case in which the contact angle between the cutting tool 7 and the workpiece W changes in a deburring or chamfering process, one of the portions in the profiling guide portion 45 (including, for example, the center T1, the right end T2, and the left end T3) comes in contact with the work surface M of the workpiece W as illustrated in FIGS. 5A to 5F, so that the cutting tool 7 can follow the work surface M.

Thus, it is possible to process the work surface M of the workpiece W easily with almost no orientation control of the nav. tool 9.

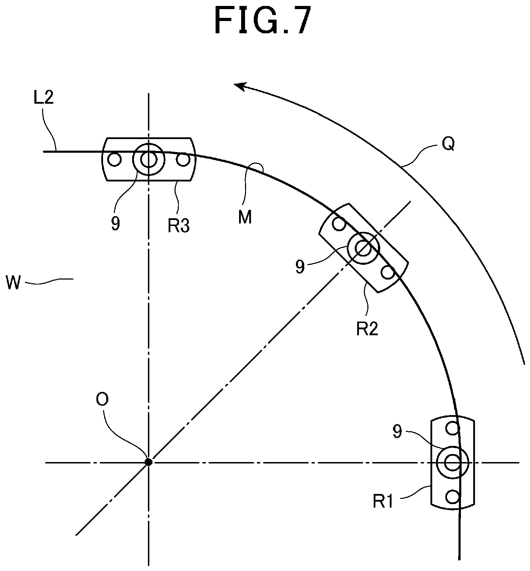

FIG. 7 illustrates, as an example, a case in which the work surface M of the workpiece W changes along a line L2 in the present embodiment. The line L2 is an approximately circular arc centered on point O. The arrow Q indicates the direction of progress during processing. FIG. 8 illustrates a second comparative example in which the opening 141 of the nav. tool 109 has a V-shaped groove 145 as in the first comparative example.

For the second comparative example (the V-shaped groove 145), as illustrated in FIG. 8, the orientation of the nav. tool 109 needs to be adjusted at all positions S1 to S6 such that the nav. tool 109 is oriented in the direction of the tangent line of the line L2.

In the present embodiment, the profiling guide portion 45 extends in the circumferential direction and has a conical shape. Thus, in the case in which the contact angle between the cutting tool 7 and the workpiece W changes in a deburring or chamfering process as illustrated in FIG. 7, the center T1 or its vicinities of the profiling guide portion 45 is in contact with the work surface M of the workpiece W at all the positions (including, for example, position R1, position R2, and position R3). Thus, while processing is continued, it is possible to process the work surface M of the workpiece W without adjusting the orientation of the nav. tool 9.

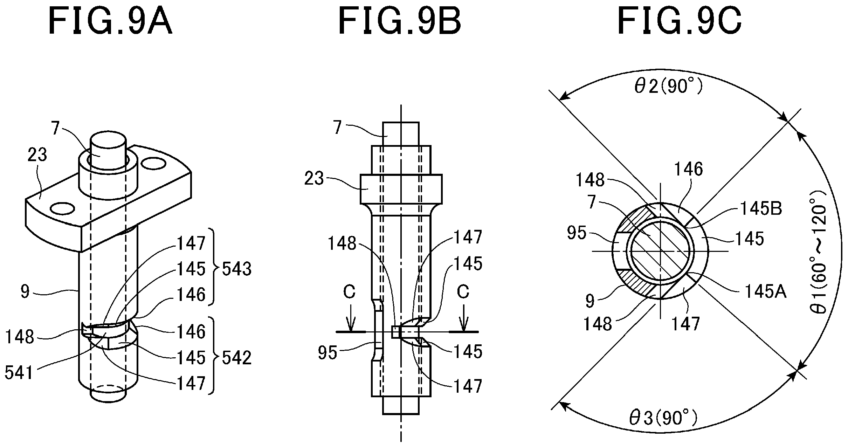

FIGS. 9A to 9C illustrate a nav. tool 9 according to a second embodiment, FIG. 9A is a perspective view of the nav. tool 9, FIG. 9B is a side view of the nav. tool 9, and FIG. 9C is a cross-sectional view taken along line C-C in FIG. 9B. In FIGS. 9A to 9C, the same portions as in FIGS. 3A and 3B and 4A and 4B are denoted by the same signs, and description thereof is omitted.

The nav. tool 9 has an opening 541 that exposes the blade portion of the cutting tool 7 around its peripheral surface. The opening 541 has a pair of opening edge portions 542 and 543.

The opening edge portions 542 and 543, as illustrated in FIGS. 9A and 9B, each have a profiling guide portion 145 located at the center portion and extending in the circumferential direction and recessed portions 146 and 147 located on both sides of the profiling guide portion 145 and extending in the circumferential direction.

The recessed portion 146, as illustrated in FIG. 9C, is formed by cutting the opening edge portions 542 and 543 along the tangent line direction of an inner end point 145B of the profiling guide portion 145. The recessed portion 147 is formed by cutting the opening edge portions 542 and 543 along the tangent line direction of an inner end point 145A of the profiling guide portion 145. In addition, at each end of the opening 541 is provided an auxiliary recessed portion 148 in a rectangular shape in side view so as to connect the opening edge portions 542 and 543.

The auxiliary recessed portion 148 may have any shape that connects both ends of the opening edge portions 542 and 543; thus, it is not limited to a rectangular one, but, for example, it may be an arc shape, an elliptical shape, or the like.

Since the second embodiment has the rectangular auxiliary recessed portions 148, there can be wide margins for the work surface M of the workpiece W.

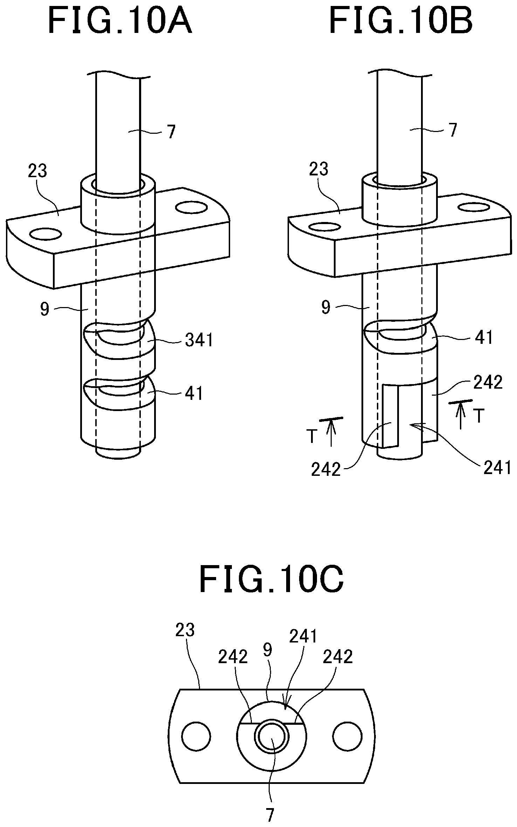

FIGS. 10A to 10C illustrate a third embodiment.

In FIG. 10A, the nav. tool 9 includes an opening 41 having the same configuration as in FIG. 3A and an opening 341 larger than the opening 41 at an interval in between in the axis direction. Depending on the size of the work surface M of the workpiece W, it is possible to selectively use the two openings 41 and 341. Besides the two openings 41 and 341, the opening 541 in FIG. 9C or the like may be combined with them.

In FIG. 10B, the nav. tool 9 has an opening 41 having the same configuration as in FIG. 3A. The nav. tool 9 also has a cut portion 241 at its distal end that exposes the blade portion of the cutting tool 7. The cut portion 241 has an open distal end, but its shape is not limited to this one. The cut portion 241 may be formed at a center portion of the nav. tool 9 in the axis direction.

The cut portion 241, as illustrated in FIG. 10C, has profiling surfaces 242 extending in the tangent line direction of the blade portion of the cutting tool 7. The cut portion 241 is suitable for removing burrs formed at parting lines of resin molded parts or the like. Besides the opening 41 and the cut portion 241, the opening 541 in FIG. 9C or the like may be combined with them.

The deburring apparatus 1 in the above embodiments includes the deburring tool 5 at the distal end portion 18 of the arm 17 of the articulated robot 3. The above embodiments show configurations in which the cutting tool 7 of the deburring tool 5 is pressed against the workpiece W placed on the workpiece placement jig 93 to remove burrs of the workpiece W.

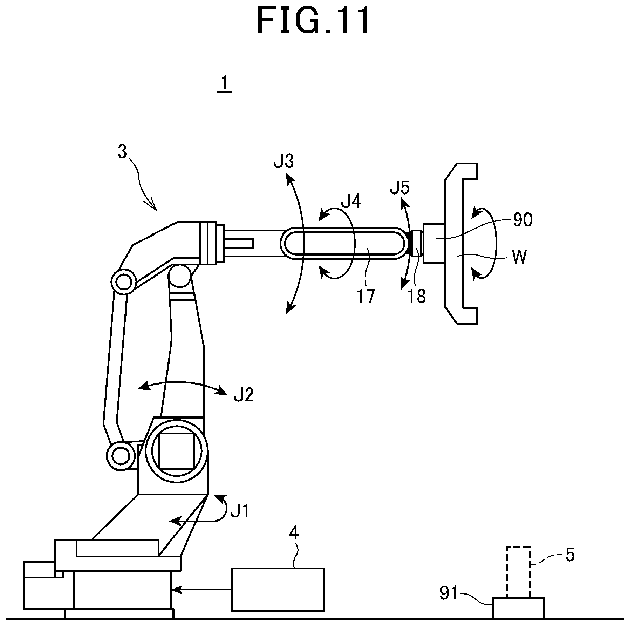

FIG. 11 illustrates a fourth embodiment.

In the fourth embodiment, a deburring tool 5 is set near the articulated robot 3. The deburring tool 5 is fixed to a fixing portion 91. Although description is omitted, other detailed configurations are almost the same as those in the above embodiments. At the distal end portion 18 of the arm 17 of the articulated robot 3 is attached a chuck 90, which holds the workpiece W.

In the fourth embodiment, the workpiece W held at the distal end portion 18 of the arm 17 of the articulated robot 3 is pressed against the deburring tool 5, and thereby burrs of the workpiece W are removed.

The foregoing embodiments only show an aspect of the present invention, and thus any changes and applications can be made within the scope not departing from the scope of the appended claims.

### [Reference Signs List]

1 deburring apparatus
3 articulated robot
4 control unit
5 deburring tool
7 cutting tool
9 nav. tool (navigation tool, profiling guide member)
41, 341 opening
42, 43 opening edge portion
45 profiling guide portion
46, 47 recessed portion
53 floating mechanism
241 cut portion

## Claims

1. A deburring apparatus (1) comprising a deburring tool (5) at a distal end portion (18) of an arm (17) of an articulated robot (3);
wherein the deburring tool (5) includes a profiling guide member (9) in which a cutting tool (7) is inserted and fitted and that has an opening (41;541) exposing a blade portion of the cutting tool, wherein
each of opening edge portions (42, 43; 542, 543) of the opening includes
a profiling guide portion (45; 145) and
recessed portions (46, 47; 146, 147) located on both sides of the profiling guide portion and extending in the circumferential direction,
wherein the deburring apparatus is configured to press the deburring tool against a workpiece (W) placed at a workpiece placement jig (93) so that the profiling guide portion (145) is moved keeping in contact with a profile reference surface (M1) of the workpiece, to remove burrs of the workpiece;
wherein the profiling guide portion expands, in the circumferential direction of the profiling guide member at an angle (θ1) of 60°-120°, in a sector shape that is centered on the center axis (P) of the profiling guide member,
each of the recessed portions expands in the circumferential direction at an angle (θ2, Θ3) of 90° centered on the center axis (P), the recessed portion being formed such that the opening edge portion is cut along at least the tangent line direction of an inner end point of the profiling guide portion, and
the profiling guide portion is formed to have a conical shape in side view.

2. The deburring apparatus according to claim 1, comprising an auxiliary recessed portion (148) located on each end of the opening and formed so as to connect the opening edge portion.

3. The deburring apparatus according to claim 1 or 2, wherein
the profiling guide member has a plurality of the openings at intervals in the axis direction.

4. The deburring apparatus according to any one of claims 1 to 3, wherein
the profiling guide member includes a cut portion (241) exposing the blade portion of the cutting tool, and
the cut portion has a profiling surface (242) extending in the tangent line direction of the blade portion.

## Patentansprüche

1. Entgratungsvorrichtung (1), die an einem distalen Endabschnitt (18) eines Arms (17) eines Gelenkroboters (3) ein Entgratungswerkzeug (5) aufweist;
wobei das Entgratungswerkzeug (5) ein Profilierungsführungselement (9) enthält, in das ein Schneidwerkzeug (7) eingesetzt und eingepasst ist und das eine Öffnung aufweist (41; 541) aufweist, die einen Messerabschnitt des Schneidwerkzeugs freilegt, wobei
jeder von Öffnungsrandabschnitten (42, 43; 542, 543) der Öffnung enthält:
einen Profilierungsführungsabschnitt (45;145) und
Vertiefungsabschnitte (46, 47; 146, 147), die an beiden Seiten des Profilierungsführungsabschnitts angeordnet sind und sich in der Umfangsrichtung erstrecken,
wobei die Entgratungsvorrichtung konfiguriert ist, um das Entgratungswerkzeug gegen ein an einer Werkstückplatzierungsvorrichtung (93) platziertes Werkstück (W) zu drücken, sodass der Profilierungsführungsabschnitt (145) mit einer Profilierungsreferenzfläche (M1) des Werkstücks Kontakt haltend bewegt wird, um Grate des Werkstücks zu entfernen;
wobei sich der Profilierungsführungsabschnitt, in der Umfangsrichtung des Profilierungsführungselements mit einem Winkel (Θ1) von 60°- 120°, in einer Sektorform ausdehnt, die auf der Mittelachse (P) des Profilierungsführungselements zentriert ist,
wobei sich jeder der Vertiefungsabschnitte in der Umfangsrichtung mit einem Winkel (Θ2, Θ3) von 90° ausdehnt, der auf der Mittelachse (P) zentriert ist, wobei der Vertiefungsabschnitt derart ausgebildet ist, dass der Öffnungsrandabschnitt entlang zumindest der Tangentiallinienrichtung eines inneren Endpunkts des Profilierungsführungsabschnitts geschnitten ist, und
der Profilierungsführungsabschnitt so ausgebildet ist, dass er in Seitenansicht eine konische Form hat.

2. Die Entgratungsvorrichtung nach Anspruch 1,
die einen Hilfsvertiefungsabschnitt (148) aufweist, der an jedem Ende der Öffnung angeordnet und zum Verbinden des Öffnungsrandabschnitts ausgebildet ist.

3. Die Entgratungsvorrichtung nach Anspruch 1 oder 2, wobei das Profilierungsführungselement eine Mehrzahl der Öffnungen mit Intervallen in der Achsrichtung hat.

4. Die Entgratungsvorrichtung nach einem der Ansprüche 1 bis 3, wobei
das Profilierungsführungselement einen Schneidabschnitt (241) enthält, der den Messerabschnitt des Schneidwerkzeugs freilegt, und
der Schneidabschnitt eine Profilierungsfläche (242) hat, die sich in der Tangentialllinienrichtung des Messerabschnitts erstreckt.

## Revendications

1. Appareil d'ébavurage (1) comprenant un outil d'ébavurage (5) au niveau d'une partie d'extrémité distale (18) d'un bras (17) d'un robot articulé (3) ;
dans lequel l'outil d'ébavurage (5) comporte un élément guide de profilage (9) dans lequel est inséré et ajusté un outil de coupe (7) qui a une ouverture (41 ; 541) exposant une partie lame de l'outil de coupe, dans lequel
chacune de parties de bord d'ouverture (42, 43 ; 542, 543) de l'ouverture comporte une partie guide de profilage (45 ; 145) et
des parties évidées (46, 47 ; 146, 147) situées sur les deux côtés de la partie guide de profilage et s'étendant dans la direction circonférentielle,
dans lequel l'appareil d'ébavurage est configuré pour presser l'outil d'ébavurage contre une pièce à travailler (W) placée au niveau d'un gabarit de positionnement de pièce à travailler (93) de telle sorte que la partie guide de profilage (145) est déplacée tout en restant en contact avec une surface de référence de profil (M1) de la pièce à travailler, pour éliminer les bavures de la pièce à travailler ;
dans lequel la partie guide de profilage s'étend, dans la direction circonférentielle de l'élément guide de profilage selon un angle (θ1) de 60° à 120°, sous une forme de secteur qui est centrée sur l'axe central (P) de l'élément guide de profilage,
chacune des parties évidées s'étend dans la direction circonférentielle selon un angle (θ2, θ3) de 90° centré sur l'axe central (P), la partie évidée étant formée de telle sorte que la partie de bord d'ouverture est découpée le long d'au moins la direction de ligne tangente d'un point d'extrémité interne de la partie guide de profilage, et
la partie guide de profilage est formée pour avoir une forme conique en vue latérale.

2. Appareil d'ébavurage selon la revendication 1, comprenant une partie évidée auxiliaire (148) située sur chaque extrémité de l'ouverture et formée de façon à relier la partie de bord d'ouverture.

3. Appareil d'ébavurage selon la revendication 1 ou 2, dans lequel
l'élément guide de profilage a une pluralité des ouvertures situées à des intervalles dans la direction axiale.

4. Appareil d'ébavurage selon l'une quelconque des revendications 1 à 3, dans lequel l'élément guide de profilage comporte une partie découpée (241) exposant la partie lame de l'outil de coupe, et
la partie découpée a une surface de profilage (242) s'étendant dans la direction de ligne tangente de la partie lame.
